# EUROPEAN PATENT APPLICATION

(11) **EP 4 108 060 A1**
(43) Date of publication of application: **28.12.2022**
(21) Application number: 22153176.7
(22) Date of filing: 25.01.2022
(51) Int. Cl.: A01D 34/416

(54) **DEVICE FOR ANCHORING TRIMMING LINES TO AN INTER-ROW HEAD AND INTER-ROW HEAD WITH SUCH DEVICE**

(30) Priority: 16.02.2021 IT 202100003443; 06.05.2021 IT 202100011570
(71) Applicant: Zanon S.R.L., 35011 Campodarsego PD (IT)
(72) Inventor: ZANON, Franco, 35011 CAMPODARSEGO PD (IT)
(74) Representative: Modiano, Micaela Nadia

(57) **Abstract**

A device (10, 110) for anchoring trimming lines (14, 114) to an inter-row head (11, 111) provided with a rotor (12, 112), the device (10, 110) comprising a flat body (15, 115) for coupling to the inter-row head (11, 111). The device (10, 110) also comprises at least one line guiding element (17a, 17b, 116) which is free with respect to the body (15, 115).

## Description

The present invention relates to a device for anchoring trimming lines to an inter-row head.

The invention also relates to an inter-row head with such a device.

The inter-row head is an apparatus which can be applied to various grass trimming machines, such as for example a shredder, mainly on orchards, vineyards or crops in which it is important to keep the stems of plants free from weeds.

The inter-row head comprises a support/cover having a circular contour below which, in the configuration for use, there is a substantially disk-like rotor, which rotates about its own axis, is concentric to the support/cover, and from which trimming lines, generally made of nylon, having such a length and profile as not to protrude radially from the space occupation of the support/cover, extend radially.

Such rotor is moved by a motor.

The motor turns the rotor, which due to its rotation moves the trimming lines, which cut the grass by striking it.

These known methods have some drawbacks.

Trimming lines are normally fixed mechanically to the rotor by virtue of anchoring elements, for example fastening means such as clamps and/or clips, or knots on adapted eyelets.

During use, these lines are subjected to considerable torsion and friction against the anchoring elements and can be damaged early, making frequent replacement necessary and consequently slowing the grass mowing operations.

Furthermore, the use of such fastening means entails a line fixing and/or replacement process that is long and not always easy.

The aim of the present invention is to provide a device for anchoring lines to an inter-row head that is capable of improving the background art in one or more of the aspects indicated above.

Within this aim, an object of the invention is to provide a device for anchoring trimming lines to an inter-row head that allows to reduce the stresses on the lines with respect to the anchoring means of the known type, at the same time limiting the friction of the lines against said means and increasing their strength and lifespan.

Another object of the invention is to provide a device for anchoring trimming lines to an inter-row head that makes it possible to lower and easier maintenance/replacement of the lines with respect to anchoring means of the known type.

Another object of the invention is to provide an inter-row head provided with a device for anchoring trimming lines that is capable of achieving the aim and objects described above.

An object of the present invention is furthermore to overcome the drawbacks of the background art in a manner that is alternative to any existing solutions.

Another object of the invention is to provide a device for anchoring trimming lines to an inter-row head that is highly reliable, relatively easy to provide and at competitive costs.

This aim, as well as these and other objects which will become better apparent hereinafter, are achieved by a device for anchoring trimming lines to an inter-row head provided with a rotor, said device comprising a flat body for coupling to said inter-row head, said device being characterized in that it comprises at least one line guiding element which is free with respect to said body.

This aim, as well as these and other objects which will become better apparent hereinafter, are achieved by an inter-row head which comprises a motor and a rotor, moved by said motor, characterized in that it comprises such a device.

Further characteristics and advantages of the invention will become better apparent from the description of a preferred but not exclusive embodiment of the device for anchoring trimming lines to an inter-row head according to the invention, illustrated by way of non-limiting example in the accompanying drawings, wherein:
Figure 1 is a perspective view of an inter-row head with a device for anchoring trimming lines, according to the invention, in a first embodiment;
Figure 2 is a partial view of the inter-row head of Figure 1;
Figure 3 is an enlarged-scale view of a detail of Figure 2;
Figure 4 is an exploded view of a device for anchoring trimming lines to an inter-row head, according to the invention, in its first embodiment;
Figure 5 is a perspective view of an inter-row head with a device for the anchoring of trimming lines, according to the invention, in a second embodiment;
Figure 6 is a partial view of the inter-row head of Figure 5;
Figure 7 is a partial exploded view of a device for anchoring trimming lines to an inter-row head according to the invention in its second embodiment.

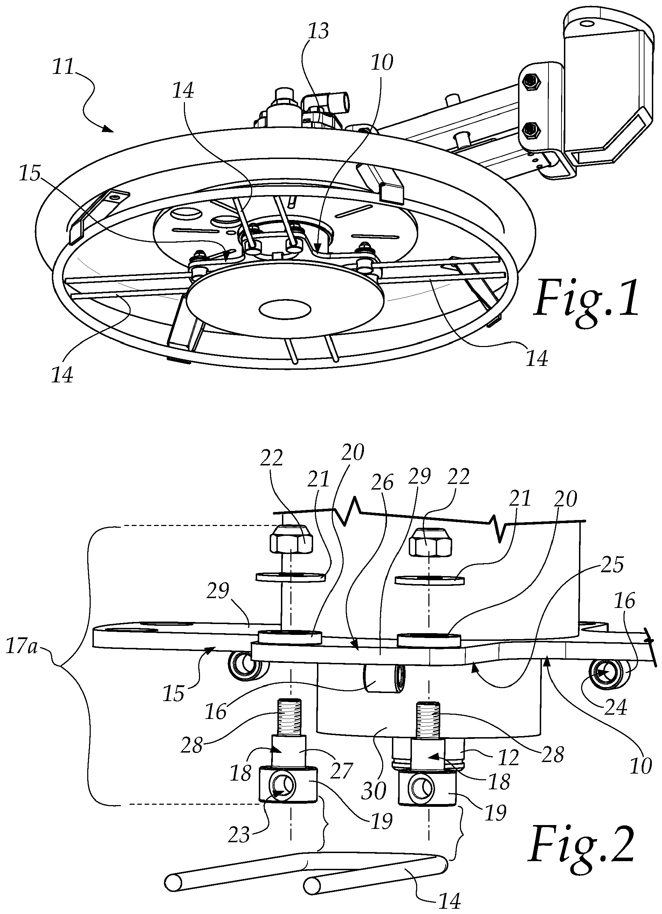

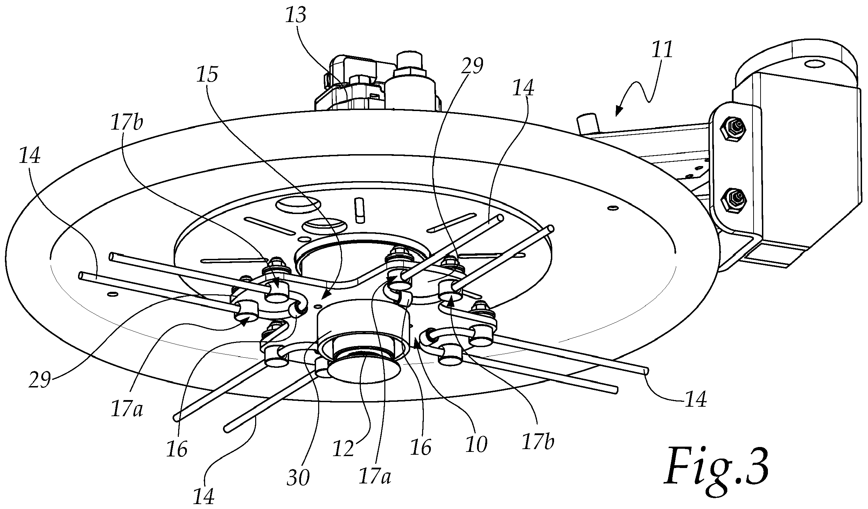

With reference to Figures 1 to 4, a device for anchoring trimming lines to an inter-row head according to the invention, in a first embodiment, is designated generally by the reference numeral 10.

The device 10 for anchoring trimming lines 14 is applied to an inter-row head 11, which comprises a rotor 12 driven by a motor 13.

The device 10 comprises a flat body 15 for coupling to the inter-row head 11, which is associated with the rotor 12 and is concentric thereto in the configuration for use.

In the example shown in the figures, the body 15 has a cross-like contour; however, in other embodiments the body 15 can have other contours, for example a circular or quadrangular one.

The device 10 comprises at least:
- a first line guiding element 16 which is integral with the body 15,
- two second line guiding elements 17a, 17b, which are associated with the body 15 and are free with respect to it.

In the present description, the term "free" means that the line guiding elements 17a, 17b can rotate freely about their own axis, which is perpendicular to the plane of arrangement of the body 15.

In particular, the device 10 comprises, for each trimming line 14, a first line guiding element 16 and two second line guiding elements 17a, 17b.

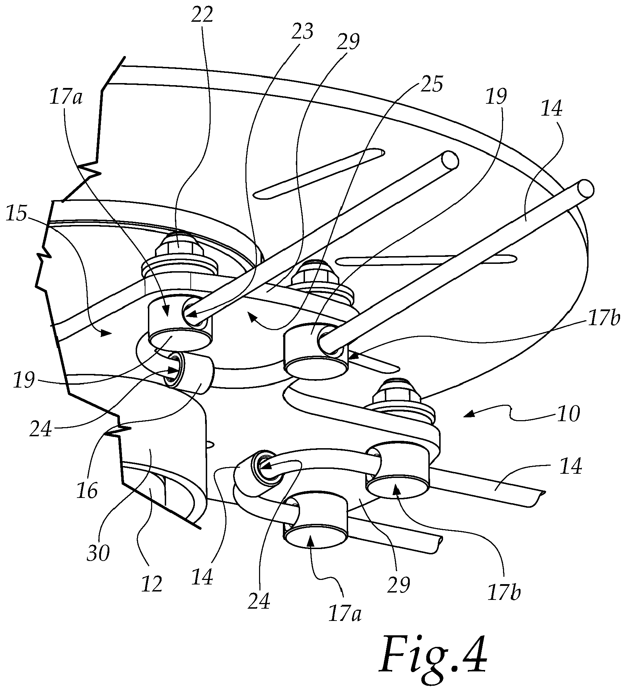

With particular reference to Figure 4, the first line guiding element 16 is, for example, monolithic with the body 15 and/or welded and/or fixed permanently to a surface 25 that is a lower surface in the configuration for use, of the body 15.

Such first line guiding element 16 has a first through hole 24, with an axis of extension that is parallel to the plane of arrangement of the body 15.

Each second line guiding element 17a, 17b instead comprises a bolt which comprises a pivot/screw 18 with a perforated head 19, which is directed toward the surface 25 that is a lower surfacein the configuration for use, of the body 15.

The pivot 18 is inserted in a corresponding through hole of said body 15 which has a bushing 20 for preventing seizing and is fastened onto the upper surface of the latter by means of a locking nut 22.

Specifically, the bushing 20, made of carburized steel, suitable for the insertion of the pivot 18, is inserted by pressing into a corresponding through hole of the body 15.

Each second line guiding element 17a, 17b comprises, in the following order, between the upper surface 26 of the body 15 and the locking nut 22:
- the bushing 20, made of carburized steel for preventing seizing, which faces and is in contact with asurface 26 that is an upper surface in the configuration for use, of the body 15.
- and/or a shimming washer 21.

In particular, the pivot 18 has, on the head 19, a second through hole 23 with an axis of extension that is parallel to the plane of arrangement of the body 15 and a stem which is extended at right angles to the head 19 and has, starting from the latter:
- a first widened portion 27, which is free with respect to the corresponding hole of the body 15 and/or of the bushing 20 in which the pivot 18 is inserted,
- a second threaded portion 28, with a smaller diameter than the first portion 27, on which the locking nut 22 is screwed.

The first portion 27, which is free, can therefore rotate about the axis of extension of the stem of the pivot 18, within the corresponding hole of the body 15 and/or of the bushing 20 in which the latter is inserted.

The first line guiding element 16 and the second line guiding elements 17a, 17b are crossed by a trimming line 14, in the configuration for use, with the first line guiding element 16 interposed between the two second line guiding elements 17a, 17b, along the trajectory of extension of the trimming line 14.

Advantageously, the second line guiding elements 17a, 17b are arranged in a mirror-symmetrical manner with respect to the first line guiding element 16, so as to give the trimming line 14, which passes through them, a U-like shape, with the wings of the U which are substantially radial with respect to the axis of rotation of the body 15.

With reference to the figures, the body 15 has a cross-like contour with four wings 29, each of which extends from a central tubular element 30, and is concentric to the rotor 12 of the inter-row head 11.

Each one of the wings 29 is provided with a trimming line 14 and comprises a first line guiding element 16 and two second line guiding elements 17a, 17b.

The two second line guiding elements 17a, 17b are substantially proximate to the free end of the respective wing 29.

During the use of the inter-row head 11, the motor 13 moves the rotor 12 on which the body 15 is keyed and which, by rotating, entrains with it the trimming lines 14, moving them.

In this step, the two second line guiding elements 17a, 17b, being free with respect to the body 15, can rotate about their own axis, assisting at least partially the trajectory of the lines 14 during cutting.

In this manner, the stresses and the friction of the lines 14 on the second line guiding elements 17a, 17b are limited, increasing the strength and lifespan of said lines 14.

The first line guiding element 16 is adapted to guide the line 14 without allowing to extract it from the device.

It should also be noted that with a device 10 according to the invention the maintenance and replacement of the line 14 is easy and quick, since it is not necessary to use any tool but it is sufficient to insert/extract, through the line guiding elements 17a, 16, 17b, a precut line 14.

Furthermore, it should be noted that with the device 10 according to the invention the anchoring of the trimming lines 14 to the inter-row head 11 is reversible.

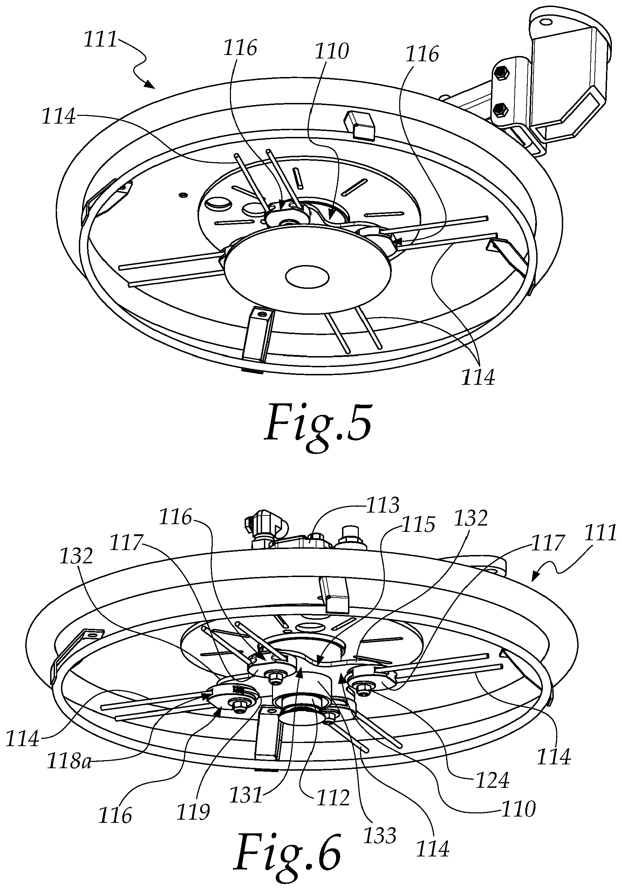

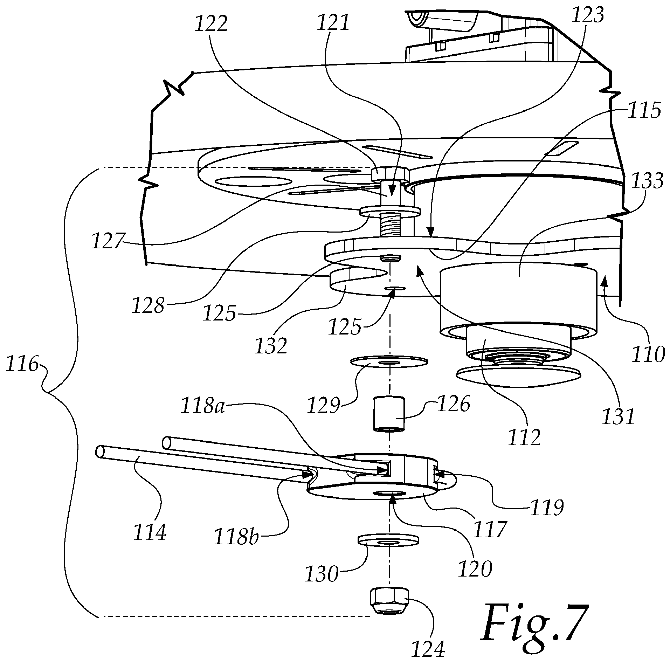

Figures 5 to 7 show a device for anchoring trimming lines to an inter-row head according to the invention in a second embodiment, generally designated by the reference numeral 110.

The device 110 for anchoring trimming lines 114 is applied to an inter-row head 111, which comprises a rotor 112 driven by a motor 113.

The device 110 comprises a flat body 115, for coupling to the inter-row head 111, which is associated with the rotor 112 and is concentric thereto in the configuration for use.

In the example shown in the figures, the body 115 has a cross-like contour, but in other embodiments the body 115 may have other outlines, for example a circular or quadrangular one.

The device 110 comprises at least one line guiding element 116 which is free with respect to the body 115.

In the present description, the term "free" is understood to mean that the line guiding element 116 can at least partially rotate freely about its own axis, which is perpendicular to the plane of arrangement of the body 115.

In particular, the device 110 comprises a line guiding element 116 for each line 114.

The line guiding element 116 comprises a disk-like element 117 which has a plane of arrangement that is parallel to the plane of arrangement of the body 115 and has two opposite and mirror-symmetrical through openings 118a, 118b, with an axis of extension that is parallel to the plane of arrangement of the disk-like element 117, in which the line 114 is inserted.

Between the two through openings 118a, 118b, the disk-like element 117 has a perimetric/circumferential slot 119, which has an arc-like profile, for the accommodation of a corresponding portion of the line 114.

By virtue of the two through openings 118a, 118b and by virtue of the slot 119, the line 114 has a U-shaped extension around the axis of rotation of the disk-like element 117, with the wings of the U-shape substantially radial with respect to the axis of rotation of the body 115.

The disk-like element 117 is made of plastic or metallic material.

The disk-like element 117 is provided with a first through hole 120, with an axis of extension that is perpendicular to the plane of arrangement of the body 115 and coincides with the rotation axis of the disk-like element 117.

The line guiding element 116 comprises a bolt which in turn comprises:
- a pivot/screw 121 with a head 122 that is directed toward the upper surface 123, in the configuration for use, of the body 115, and a stem 127 which is at least partially threaded,
- a nut 124, for the locking of the pivot/screw 121, which is opposite the head 122 with respect to the body 115 and is screwed onto the stem 127.

The pivot/screw 121 is inserted in a corresponding second through hole 125 of the body 115 and in the first through hole 120 of the disk-like element 117, fastening the disk-like element 117 to the body 115 by means of the nut 124.

In particular, the line guiding element 116 comprises a tubular bushing 126, which is inserted in the first through hole 120 of the disk-like element 117.

The bushing 126 has an inside diameter that is larger than the diameter of the stem 127 of the pivot/screw 121.

Furthermore, the line guiding element 116 comprises a plurality of washers which are crossed by the stem 127 of the pivot/screw 121, in the following order:
- a first shimming washer 128, which is interposed between the head 122 of the pivot/screw 121 and the upper surface 123 of the body 115, and is in contact with both,
- a second shimming washer 129, which is interposed between the lower surface 131 of the body 115, which is opposite to the upper surface 123, and the bushing 126, and is in contact with both,
- a third shimming washer 130, which is interposed between the bushing 126 and the nut 124 and is in contact with both.

In the specific case, the pivot/screw 121 passes in the following order through:
- the first washer 128,
- the second through hole 125 of the body 115,
- the second washer 129,
- the bushing 126, which in turn is inserted in the first through hole 120 of the disk-like element 117,
- the third washer 130,
- at least partially the nut 124, screwing into it.

In practice, the components of the line guiding element 116 have shapes and dimensions such that the pivot/screw 121 is fixed with respect to the second hole 125 of the body 115 and the disk-like element 117 is free with respect to the bushing 126 and/or the body 115.

In the specific case, the bushing 126 is higher than the height of the disk-like element 117.

In the present description, the term "height" is understood to refer to the dimension along an axis that is perpendicular to the plane of arrangement of the body 115.

The first through hole 120 of the disk-like element 117 has a diameter that is larger than the outside diameter of the bushing 126 and such as to allow the disk-like element 117 to be free with respect to the bushing 126 and to rotate about the latter.

The bushing 126, with the disk-like element 117 around it, is therefore associated with the body 115 by means of: the pivot/screw 121, the first washer 128, the second washer 129, the third washer 130, and the nut 124.

With reference to the figures, the body 115 has a cross-like contour with four wings 132, each of which extends from a central tubular element 133 which is concentric to the rotor 112 of the inter-row head 111.

Each one of the wings 132 is provided with a trimming line 114 and comprises a line guiding element 116.

During the use of the inter-row head 111, the motor 113 moves the rotor 112 on which the body 115 is keyed, and which, by rotating, entrains with it the trimming lines 114, moving them.

In this step, the line guiding elements 116, being free with respect to the body 115, can rotate about their own axis, at least partially following the trajectory of the lines 114 during trimming.

In this manner, the stresses and friction of the lines 114 on the line guiding elements 116 are limited, increasing the strength and lifespan of said lines 114.

The slot 119 of the disk-like element 117, of the line guiding element 116, is adapted to guide the line 114 without allowing it to be extracted from the device.

It should also be noted that with a device 110 according to the invention the maintenance and replacement of the line 114 is easy and quick, since it is not necessary to use any tool but it is sufficient to insert/extract, through the through openings 118a, 118b of the disk-like element 117, of the line guiding element 116, a pre-cut line 114.

It should also be noted that the anchoring of the trimming lines 114 to the inter-row head 111 is reversible also with the device 110 according to the invention.

In practice it has been found that the invention achieves the intended aim and objects, providing a device for anchoring trimming lines to an inter-row head that allows to reduce the stresses on the lines with respect to anchoring means of the known type, at the same time limiting the friction of the lines thereon and increasing strength and lifespan.

The invention provides a device for anchoring lines to an inter-row head that allows a reduced and easier maintenance/replacement of the lines with respect to anchoring means of the known type.

The invention thus conceived is susceptible of numerous modifications and variations, all of which are within the scope of the appended claims; all the details may furthermore be replaced with other technically equivalent elements.

In practice, the materials used, so long as they are compatible with the specific use, as well as the contingent shapes and dimensions, may be any according to the requirements and the state of the art.

The disclosures in Italian Patent Applications No. 102021000003443 and 102021000011570 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device (10, 110) for anchoring trimming lines (14, 114) to an inter-row head (11, 111) provided with a rotor (12, 112), said device (10, 110) comprising a flat body (15, 115) for coupling to said inter-row head (11, 111), said device (10, 110) being **characterized in that** it comprises at least one line guiding element (17a, 17b, 116) which is free with respect to said body (15, 115).

2. The device (10) according to claim 1, **characterized in that** it comprises at least:
- a first line guiding element (16), which is integral with said body (15),
- two second line guiding elements (17a, 17b) which are associated with said body (15) and are free with respect to it.

3. The device (10) according to claim 2, **characterized in that** it comprises, for each one of said trimming lines (14), a said first line guiding element (16) and two said second line guiding elements (17a, 17b).

4. The device (10) according to one or more of the preceding claims, **characterized in that** said first line guiding element (16) is monolithic with said body (15) and/or welded and/or fixed permanently to a surface (25) of said body (15), that is a lower surface in the configuration for use, and is provided with a first through hole (24), with an axis of extension that is parallel to the plane of arrangement of said body (15).

5. The device (10) according to one or more of the preceding claims, **characterized in that** each one of said second line guiding elements (17a, 17b) comprises a bolt which comprises a pivot (18) with a perforated head (19) that is directed toward said surface (25) of said body (15), that is a lower surface in the configuration for use, said pivot (18) being inserted in a corresponding through hole of said body (15) and fastened on a surface (26) of the latter that is an upper surface in the configuration for use by means of a locking nut (22).

6. The device (10) according to one or more of the preceding claims, **characterized in that** said pivot (18) is inserted in a corresponding through hole of said body (15) provided with a bushing (20) for preventing seizing, and is fastened on the upper surface of the latter by means of a locking nut (22), said bushing (20) being inserted by pressing into a corresponding through hole of said body (15).

7. The device (10) according to the preceding claim, **characterized in that** each one of said second line guiding elements (17a, 17b) comprises, between said upper surface (26) of said body (15) and said locking nut (22), said bushing (20), which faces and is in contact with said upper surface (26) of said body (15), and/or a shimming washer (21).

8. The device (10) according to one or more of the preceding claims, **characterized in that** said pivot (18) has, on said head (19), a second through hole (23) with an axis of extension that is parallel to the plane of arrangement of said body (15), and a stem, which extends at right angles to said head (19), which in turn has, starting from the latter:
- a first portion (27) which is free with respect to said corresponding through hole of said body (15) and/or of said bushing (20) in which said pivot (18) is inserted,
- a second threaded portion (28) in which said locking nut (22) is screwed.

9. The device (10) according to one or more of the preceding claims, **characterized in that** said first line guiding element (16) and said second line guiding elements (17a, 17b) are adapted to be crossed by a trimming line (14), with said first line guiding element (16) interposed between said two second line guiding elements (17a, 17b) along the trajectory of extension of said trimming line (14).

10. The device (10) according to one or more of the preceding claims, **characterized in that** said second line guiding elements (17a, 17b) are arranged in a mirror-symmetrical manner with respect to said first line guiding element (16), so as to give said trimming line (14) a U-shape, with the wings of said U-shape substantially radial with respect to the axis of rotation of said body (15).

11. The device (10) according to one or more of the preceding claims, **characterized in that** said body (15) has a cross-like contour with four wings (29), each extending from a central tubular element (30) adapted to be concentric with the rotor (12) of said inter-row head (11), each one of said wings (29) comprising said first line guiding element (16) and said two second line guiding elements (17a, 17b), said two second line guiding elements (17a, 17b) being substantially proximate to the free end of the respective one of said wings (29).

12. The device (110) according to claim 1, **characterized in that** it comprises a line guiding element (116) for each one of said trimming lines (114).

13. The device (110) according to the preceding claim, **characterized in that** said line guiding element (116) comprises a disk-like element (117) with a plane of arrangement that is parallel to the plane of arrangement of said body (115), said disk-like element (117) having two opposite and mirror-symmetrical through openings (118a, 118b) with an axis of extension that is parallel to the plane of arrangement of said disk-like element (117), which are adapted for the insertion of one of said trimming lines (114).

14. The device (110) according to the preceding claim, **characterized in that** said disk-like element (117) has, between said two through openings (118a, 118b), a perimetric/circumferential slot (119) that has an arc-like profile.

15. The device (110) according to one or more of claims 12 to 14, **characterized in that** said disk-like element (117) has a first through hole (120) with an axis of extension that is perpendicular to the plane of arrangement of said body (115) and coincides with the axis of rotation of said disk-like element (117).

16. The device (110) according to one or more of claims 12 to 15, **characterized in that** said line guiding element (116) comprises a bolt which in turn comprises:
- a pivot/screw (121) with the head (122) directed toward the upper surface (123), in the configuration for use, of said body (115), and an at least partially threaded stem (127),
- a nut (124) for locking said pivot/screw (121) which is opposite to said head (122) with respect to said body (115) and is screwed onto said stem (127),
said pivot/screw (121) being inserted in a corresponding second through hole (125) of said body (115) and in said first through hole (120) of said disk-like element (117), fastening said disk-like element (117) to said body (115) by means of said nut (124).

17. The device (110) according to the preceding claim, **characterized in that** said line guiding element (116) comprises a tubular bushing (126) which is inserted in said first through hole (120) of said disk-like element (117), said bushing (126) having an inside diameter that is larger than the diameter of said stem (127) of said pivot/screw (121), said first through hole (120) of said disk-like element (117) having a diameter that is larger than the outside diameter of said bushing (126) and is such as to allow said disk-like element (117) to be free with respect to said bushing (126).

18. The device (110) according to the preceding claim, **characterized in that** said line guiding element (116) comprises a plurality of washers crossed by said stem (127) of said pivot/screw (121), in the following order:
- a first washer (128), which is interposed between said head (122) of said pivot/screw (121) and said upper surface (123) of said body (115), and is in contact with both,
- a second washer (129), which is interposed between a lower surface (131) of said body (115), which is opposite to said upper surface (123), and said bushing (126), and is in contact with both,
- a third washer (130), which is interposed between said bushing (126) and said nut (124) and is in contact with both.

19. The device (110) according to the preceding claim, **characterized in that** said pivot/screw (121) passes through, in the following order:
- said first washer (128),
- said second through hole (125) of said body (115),
- said second washer (129),
- said bushing (126), which in turn is inserted in said first through hole (120) of said disk-like element (117),
- said third washer (130),
- at least partially said nut (124), screwing into it.

20. The device (110) according to one or more of claims 12 to 19, **characterized in that** said body (115) has a cross-like contour with four wings (132), each of which extends from a central tubular element (133) which is adapted to be concentric to said rotor (112) of said inter-row head (111), each one of said wings (132) being provided with one of said trimming lines (114) and comprising a line guiding element (116).

21. An inter-row head (11, 111) comprising a motor (13, 113) and a rotor (12, 112), which is moved by said motor (13, 113), **characterized in that** it comprises a device (10, 110) according to one or more of the preceding claims.
